# EUROPEAN PATENT APPLICATION

(11) **EP 1 863 238 A1**
(43) Date of publication of application: **05.12.2007**
(21) Application number: 07108922.1
(22) Date of filing: 25.05.2007
(51) Int. Cl.: H04L 12/56, H04Q 7/38

(54) **Radio base station apparatus and scheduling method**

(30) Priority: 02.06.2006 JP 2006155010
(71) Applicant: NEC CORPORATION, Minato-ku, Tokyo 108-8001 (JP)
(72) Inventor: Shibata, Takayuki, Tokyo 108-8001 (JP)
(74) Representative: Vossius & Partner

(57) **Abstract**

A radio base station apparatus adaptively controls a modulation and coding scheme of a downlink line in accordance with a quality of the downlink line to communicate with a mobile station over the air. During scheduling, a priority calculation module calculates a priority for a transmission candidate signal to the mobile station based on a reference quality, which is set for each modulation and coding scheme, and on the downlink line quality. A scheduling determination module assigns a transmission opportunity to a transmission candidate signal to the mobile station in accordance with the priority calculated by the priority calculation module.

## Description

This application is based upon and claims the benefit of priority from Japanese Patent Application No. 2006-155010 filed on June 2, 2006, the content of which is incorporated by reference.

The present invention relates to a radio base station apparatus and a scheduling method for adjusting the assignment of transmission opportunities for downlink data of the radio base station, and more particularly, to a radio base station apparatus and a scheduling method therefor in a mobile communications system for adaptively controlling a modulation scheme and a coding rate.

In recent mobile communications, there is an increasing need for transmission of a larger amount of data. For example, 3GPP (the 3rd Generation Partnership Project), which is a standardization organization of third generation mobile communications, defines a high speed downlink packet transmission scheme called HSDPA (High Speed Downlink Packet Access).

In HSDPA, a base station transmits data to a plurality of mobile stations using a downlink shared channel. The base station controls which of the mobile stations a communication opportunity should be assigned for transmitting data, based on quality information fed back from the mobile stations through uplink dedicated channels. This control is called "scheduling."

As representative scheduling algorithms, a Max C/I (carrier-to-interference power ratio) method and a PF (Proportional Fairness) method are known.

The Max C/I method is a method which assigns a communication opportunity to a mobile station which presents the highest reception quality. According to this method, since the occurrence of retransmission is reduced, the throughput can be maximized.

However, since mobile stations closer to a base station generally present better reception qualities, the Max C/I method tends to intensively assign transmission opportunities to mobile stations near the base station. As a result, a problem arises of in which the coverage provided by the base station is narrower.

The PF method, in turn, is a method which assigns a transmission opportunity to a mobile station which presents a maximum ratio of an instantaneous reception quality value to an average reception quality value. According to this method, transmission opportunities are given fairly to mobile stations which are located in environments which suffer from low reception qualities.

Also, investigations have been made to combine the Max C/I method with the PF method to improve both throughput and fairness (for example, see JP-A-2005-86216). A method proposed in JP-A-2005-86216 compares an average reception quality (Qavg) with a predetermined threshold (Qw), and controls the assignment of transmission opportunities using an instantaneous reception quality (Qinst) as an index when Qavg>Qw and using Qinst*Qw/Qavg as an index when Qavg≤Qw.

The method proposed in JP-A-2005-86216 relies on the Max C/I method which assigns transmission opportunities based on the instantaneous quality, but gives an offset by multiplying instantaneous reception quality Qinst by Qw/Qavg when average reception quality Qavg is equal to or lower than threshold Qw. This increases the possibility that transmission opportunities are assigned to mobile stations under low-quality environments.

As another technology for realizing high-speed packet transmission, there is adaptive modulation and coding (AMC), and hybrid automatic repeat request (HARQ).

AMC is a technology for adaptively switching modulation and coding scheme (MCS) for data transmission in accordance with line quality.

Generally, a larger amount of information can be transmitted as a modulation scheme provides a larger number of multi-values and a higher coding rate, but such a modulation scheme has the nature of low error resistance. Therefore, when line quality is high, throughput is increased by use of MCS which provides a larger number of multi-values and a higher coding rate for the modulation scheme. Conversely, when line quality is low, the number of times of retries can be reduced by use of MCS which provides a high error resistance, even with a smaller number of multi-values and a lower coding rate for the modulation scheme, resulting in higher throughput.

According to AMC, data can be efficiently transmitted by adaptively selecting MCS which realizes a maximum throughput in accordance with the line quality.

HARQ, in turn, is a technology which combines automatic repeat request (ARQ) for requesting a transmitter to again transmit a signal when a receiver fails to normally receive the signal with error correction decoding.

A mobile station, which is a receiver in a downlink transmission, transmits ACK to a base station when it successfully decodes received data (successful decoding). On the other hand, the mobile station transmits NACK to the base station when it fails to decode received data (unsuccessful decoding). Upon receipt of NACK from the mobile station, the base station again transmits the transmitted data to the mobile station.

Upon receipt of the retransmitted data, the mobile station uses not only the retransmitted data but also the past data, which was unsuccessfully decoded, for decoding. A method called "CC" (Chase Combining) decodes a combination of unsuccessfully decoded data with retransmitted data to produce a combined gain. On the other hand, a method called "IR" (Incremental Redundancy) changes a redundant bit pattern in use for transmission, in accordance with the number of times of retransmissions, such that a receiver is provided with a coding gain.

As described above, a scheduling method as disclosed in JP-A-2005-86216, increases transmission opportunities assigned to mobile stations in environments which suffer from low reception qualities to improve the fairness. However, when more transmission opportunities are assigned to mobile stations in environments which suffer from low reception qualities, retransmissions will be made a larger number of times, resulting in a lower use efficiency of resources and a lower throughput.

On the other hand, in a system which applies AMC, because MCS changes depending on the reception quality, there is not a high possibility that a high instantaneous reception quality will always ensure that data can be normally delivered to a mobile station. If a retransmission is caused by unsuccessful delivery of data, the resource use efficiency and throughput will be reduced, as is the case with the foregoing.

It is an object of the present invention to provide a radio base station apparatus which is capable of efficiently assigning resources to transmissions of downlink data, and a scheduling method used therefor.

To achieve the above object, a radio base station apparatus of the present invention adaptively switches a downlink line modulation scheme and a coding rate based on a downlink line quality to communicate with a mobile station apparatus over the air, and comprises a priority calculation module and a scheduling determination module.

The priority calculation module calculates a priority for a transmission candidate signal to the mobile station apparatus based on a reference quality, which is set for each modulation scheme and each coding rate, and on the downlink line quality.

A scheduling determination module assigns a transmission opportunity to a transmission candidate signal to the mobile station apparatus in accordance with the priority calculated by the priority calculation module.

The priority is calculated for a transmission candidate for each modulation scheme and each coding rate, so that the possibility of delivery can highly accurately effect on the priority in consideration of the difference in modulation scheme and coding rate. Also, since a transmission opportunity is assigned based on the priority, resources can be efficiently utilized without wasteful retransmissions.

The above and other objects, features, and advantages of the present invention will become apparent from the following description with references to the accompanying drawings which illustrate examples of the present invention.
Fig. 1 is a block diagram illustrating a radio base station apparatus according to one embodiment of the present invention;
Fig. 2 is a block diagram illustrating in detail downlink packet manager 1;
Fig. 3 is a block diagram illustrating in detail HARQ controller 4;
Fig. 4 is a block diagram illustrating in detail AMC controller 5;
Fig. 5 is a block diagram illustrating in detail the configuration of scheduling controller 6;
Fig. 6 is a flow chart illustrating a process for calculating a priority for a transmission candidate packet of a certain MS-ID and QoS in scheduling processor 41 shown in Fig. 5;
Fig. 7 is a diagram for describing the processing at step S8 in Fig. 6;
Fig. 8 is a diagram for describing a priority function used in processing at step S9 in Fig. 6;
Fig. 9A is a diagram showing the relationship between uncorrected reception SIR and corrected reception SIR;
Fig. 9B is a graph showing an exemplary relationship of a correction amount Δr for reception SIR to the number of times of retransmissions;
Fig. 10A is a diagram showing the relationship between uncorrected reference SIR and corrected reference SIR;
Fig. 10B is a graph showing an exemplary relationship of a correction amount Δs for reference SIR to the amount of fluctuations in reception SIR; and
Fig. 11 is a flow chart illustrating operations of scheduling determination processing in scheduling determination module 46 shown in Fig. 5.

One embodiment of the present invention will be described in detail with reference to the drawings.

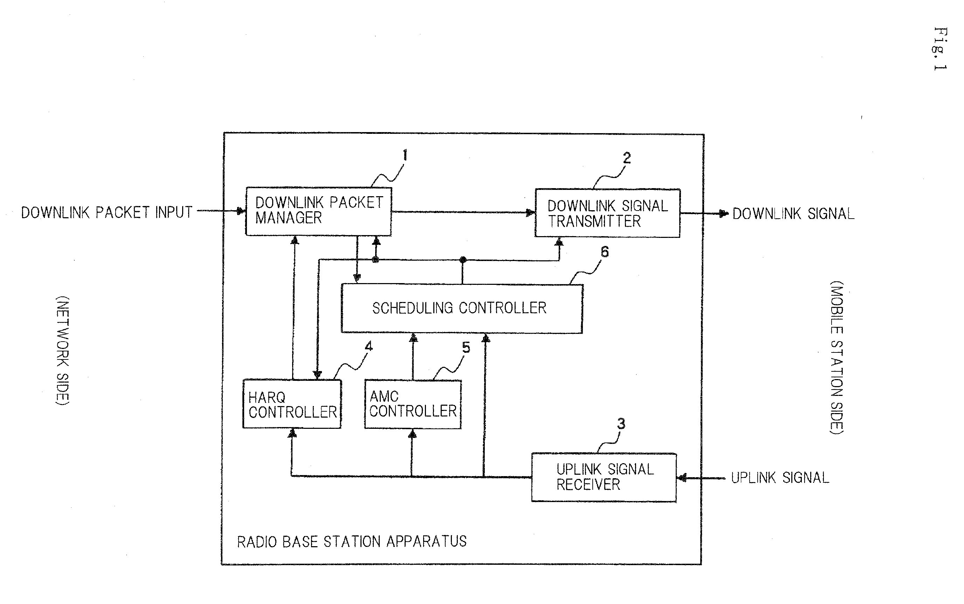

Fig. 1 is a block diagram illustrating a radio base station apparatus according to one embodiment of the present invention. Referring to Fig. 1, the radio base station apparatus of this embodiment comprises downlink packet manager 1, downlink signal transmitter 2, uplink signal receiver 3, HARQ controller 4, AMC controller 5, and scheduling controller 6.

Downlink packet manager 1 saves packets received from a network, and sends transmission candidate information to scheduling controller 6. The transmission candidate information is information on packets which are subjected to scheduling as transmission candidates, and is used for scheduling.

Also, upon receipt of a scheduling result from scheduling controller 6, downlink packet manager 1 sends packets to be transmitted to downlink signal transmitter 2 in accordance with the scheduling result.

Further, upon receipt of a determination result from HARQ controller 4 as to whether or not a retransmission is required, downlink packet manager 1 discards a packet which does not require the retransmission, as determined in the determination result, from the saved packets.

Downlink signal transmitter 2, upon receipt of a scheduling result from scheduling controller 6, encodes and modulates packets from downlink packet manager 1 to generate a downlink data channel based on MCS information included in the scheduling result. Further, downlink signal transmitter 2 generates a downlink control channel for notifying a mobile station, which is the destination of the downlink data channel, of information on MCS of the downlink data channel, and a downlink pilot channel for use by the mobile station to detect a reception timing and measure a reception quality. Then, downlink signal transmitter 2 transmits the downlink data channel, downlink control channel, and downlink pilot channel through a radio signal.

Uplink signal receiver 3 receives a radio signal from a mobile station, and detects a reception timing through a correlation operation with a known pilot series. Further, uplink signal receiver 3 demodulates and decodes an uplink control channel based on the detected reception timing to acquire a downlink reception quality and ACK/NACK information notified from the mobile station. Then, uplink signal receiver 3 notifies HARQ controller 4, AMC controller 5, and scheduling controller 6 of the acquired downlink reception quality and ACK/NACK information.

HARQ controller 4 determines whether or not a transmitted packet should be retransmitted, based on the ACK/NACK information from uplink signal receiver 3 and transmission information from scheduling controller 6, and notifies downlink packet manager 1 of the determination result as to whether or not a retransmission is required.

AMC controller 5 determines MCS for use in data transmission from the downlink reception quality received from uplink signal receiver 3 and a previously set threshold, and notifies scheduling controller 6 of the determination result.

Scheduling controller 6 performs scheduling using the downlink signal quality from uplink signal receiver 3, the determination result on MCS from AMC controller 5, and the transmission candidate information from downlink packet manager 1, and notifies downlink packet manager 1, downlink signal transmitter 2, and HARQ controller 4 of the scheduling result.

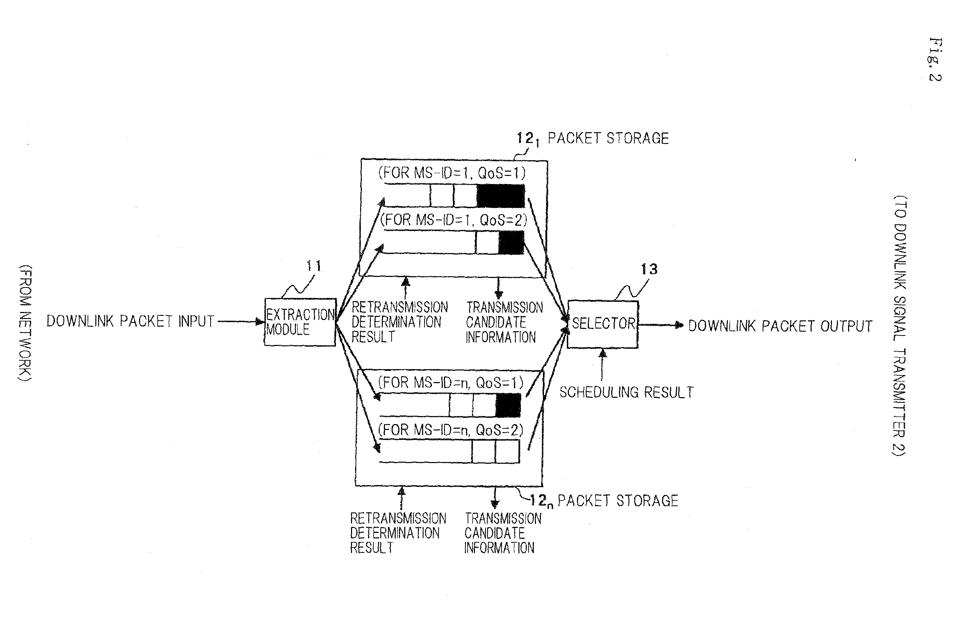

Fig. 2 is a block diagram illustrating in detail downlink packet manager 1. In Fig. 2, "■ (black square)" represents a transmitted packet for which a response is awaited, and "□ (white square)" represents a transmission waiting packet. Referring to Fig. 2, downlink packet manager 1 comprises extraction module 11, a plurality of packet storages 12₁ - 12ₙ, and selector 13.

Extraction module 11 acquires a destination (MS-ID) and required service quality (QoS) of a packet received from the network, from header information in the packet, and sends the packet to a location associated with the acquired MS-ID in packet storages 12₁ - 12ₙ.

Packet storages 12₁ - 12ₙ are each provided for each of the serviced mobile stations, and store a packet received from extraction module 11.

Packets to be transmitted may be classified into real-time traffic which permits errors to some extent but imposes a strict requirement on delays, such as audio and video, by way of example, and a non-real-time traffic which permits delays to some extent but imposes a strict requirement on errors such as file transfer and WWW browsing, and they require different service qualities (QoS), respectively. Thus, a different delay time and a different data error rate are permitted depending on QoS.

Packet storages 12₁ - 12ₙ comprise a buffer on a QoS-by-QoS basis for saving packets on a QoS-by-QoS basis. In this embodiment, each packet storage comprises two buffers on the assumption that two types of QoS (QoS==1, 2) exist. Each buffer has already stored packets ("■" in Fig. 2) which have been transmitted and for which an ACK/NACK response is awaited from a mobile station, and transmission waiting packets ("□" in Fig. 2).

A transmitted (response waiting) packet is processed in accordance with the determination results as to whether or not a retransmission is required, notified from HARQ controller 4 in Fig. 1. When the retransmission determination result indicates "retransmission required," the packet is moved to the top of transmission waiting packets in the same buffer. When the retransmission determination result indicates "retransmission not required," the packet is discarded. The first transmission waiting packets in each buffer is subjected to scheduling as a transmission candidate. Information on these transmission candidates is notified to scheduling controller 6 in Fig. 1. The transmission candidate information includes the presence or absence of a packet that is subject to scheduling, time of arrival, MS-ID, QoS, and the number of times of retransmissions and MCS at the first transmission for a retransmitted packet.

Selector 13 acquires a packet to be transmitted from the buffers of packet storages 12₁ - 12ₙ based on the scheduling result by scheduling controller 6 in Fig. 1, and sends the acquired packet to downlink signal transmitter 2.

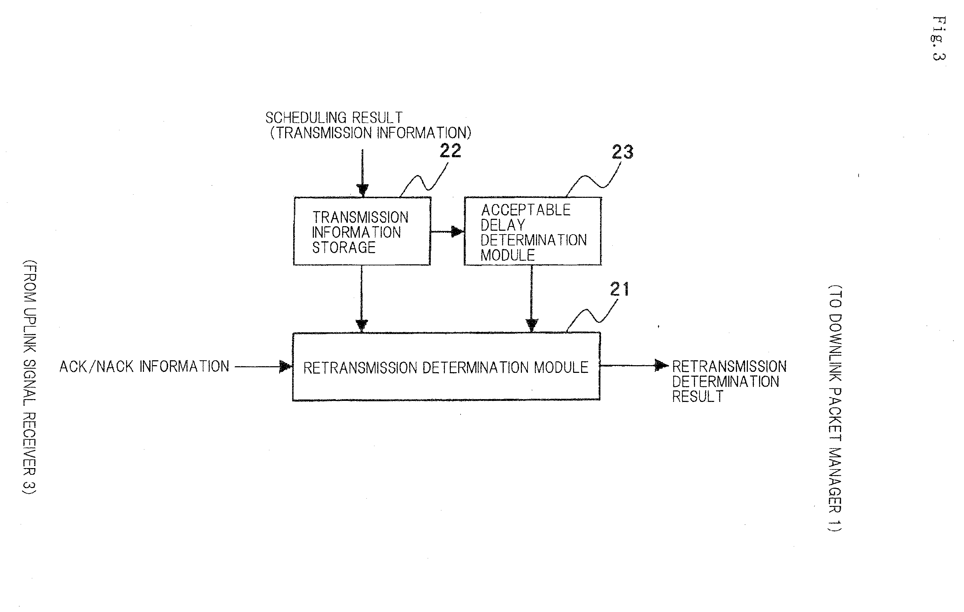

Fig. 3 is a block diagram illustrating in detail HARQ controller 4. Referring to Fig. 3, HARQ controller 4 comprises retransmission determination module 21, transmission information storage 22, and acceptable delay determination module 23.

Retransmission determination module 21 acquires MS-ID of a packet which has been transmitted RTT (Round Trip Time) prior to the present time from transmission information storage 22, and determines whether or not the packet transmitted RTT before should be retransmitted, based on ACK/NACk information from an associated mobile station among the ACK/NACK information applied from uplink signal receiver 3 in Fig. 1. Then, retransmission determination module 21 sends the determination result as to the requirement of retransmission to downlink packet manager 1.

Here, RTT refers to a delay time until an ACK/NACK response is received after a base station has transmitted a downlink signal. ACK indicates that a mobile station successfully decoded a downlink signal without errors, while NACK indicates that errors were found. Accordingly, the packet storage no longer needs to store a transmitted packet for which ACK has been returned. On the other hand, a transmitted packet should be retransmitted if NACK is returned therefor. However, since an allowable limit is defined for the delay time, the associated transmitted packet is not retransmitted but discarded if acceptable delay determination module 23 determines that the acceptable delay is exceeded. Retransmission determination module 21 determines "retransmission not required" when "ACK" is returned or when "NACK is returned and the acceptable delay is exceeded," and determines "retransmission required" when "NACK is returned and the acceptable delay is not exceeded."

Transmission information storage 22 acquires information such as MS-ID, QoS, time of arrival, number of times of retransmission of a packet which is given a transmission opportunity, based on the scheduling result from scheduling controller 6, and saves the information until RTT is elapsed, at which time retransmission determination module 21 performs the retransmission determination. Then, transmission information storage 22 notifies retransmission determination module 21 of MS-ID of the packet transmitted RTT before, and notifies acceptable delay determination module 23 of QoS, time of arrival, and number of times of retransmissions.

Acceptable delay determination module 23 determines whether or not a delay time of a packet subjected to retransmission determination is within an acceptable range based on the transmission information (QoS, time of arrival, number of times of retransmissions) from transmission information storage 22. In this event, acceptable delay determination module 23 calculates a delay time by subtracting the time of arrival of the packet from the current time, and compares the calculated delay time with a previously defined acceptable delay. Then, acceptable delay determination module 23 notifies retransmission determination module 21 of whether the acceptable delay is exceeded or not. Also, in this event, when the number of times of retransmissions has reached a maximum number of times of retransmissions which has been previously defined for QoS, the delay time is regarded as exceeding the acceptable delay even if it is within the acceptable delay.

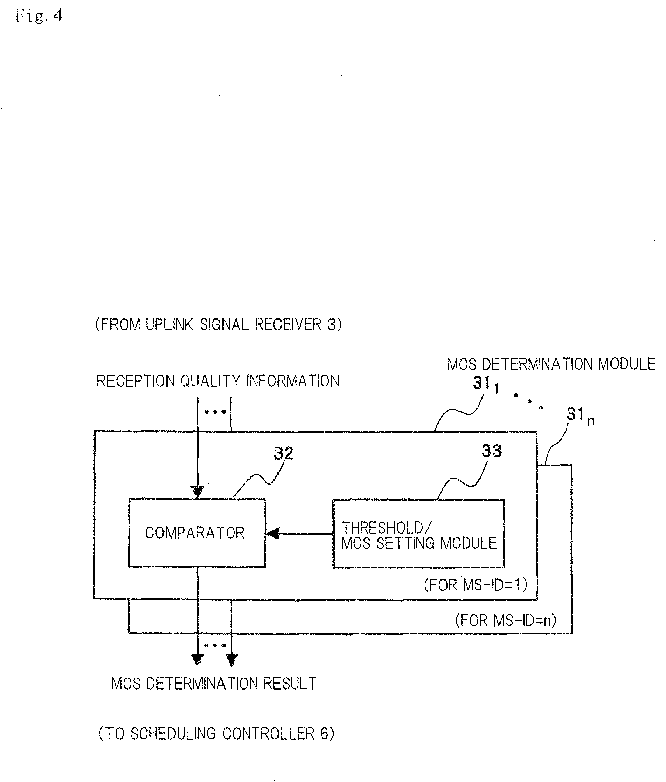

Fig. 4 is a block diagram illustrating in detail AMC controller 5. AMC controller 5 comprises a plurality of MCS determination modules 31₁ - 31ₙ. Each of determination modules 31₁ - 31ₙ comprises a comparator 32 and threshold/MCS setting module 33.

MCS determination modules 31₁ - 31ₙ, each of which is provided for each of the serviced mobile stations, determine MCS using information on reception quality at an associated mobile station, and a previously given threshold, and notifies scheduling controller 6 of the MCS determination result.

Comparator 32 compares the reception quality of the downlink supplied from uplink signal receiver 3 in Fig. 1 with (m-1) thresholds Th_0, 1, Th_1, 2, ..., Th_m-2, m-1 from threshold/MCS setting module 33 to find the order of the reception qualities and thresholds, where m is an integer equal to or larger than two, and the thresholds are placed in a relationship with one another, represented by Th_0, 1 ≤ Th_1, 2 ≤ ... ≤Th_m-2, m-1.

For m regions delimited by the thresholds, m MCS(0) - MCS(m-1) are assigned. Here, a combination of a modulation scheme and a coding rate is set such that MCS designated a larger number provides a higher throughput.

Comparator 32 determines MCS for use in data transmission. Specifically, comparator 32 determines that MCS(0) is used when q<Th_0, 1; MCS(1) when Th_0, 1 ≤ q < Th_1, 2, ...; MCS(m-2) when Th_m-3, m-2 ≤ Th_m-2, m-1; and MCS(m-1) when q ≥ Th_m-2, m-1, where q represents the reception quality. Then, comparator 32 notifies scheduling controller 6 of the MCS determination result.

Threshold/MCS setting module 33 previously saves the aforementioned thresholds Th_0, 1, Th_1, 2, ..., Th_m-2, m-1, and MCS(0) - MCS(m-1), and notifies comparator 32 of these thresholds and MCSs.

It should be noted that the thresholds and the contents of MCS need not always be the same for all mobile stations. For example, threshold/MCS setting module 33 may assign only a modulation scheme having a small number of multi-values to MCS for a mobile station which does not support high speed transmission.

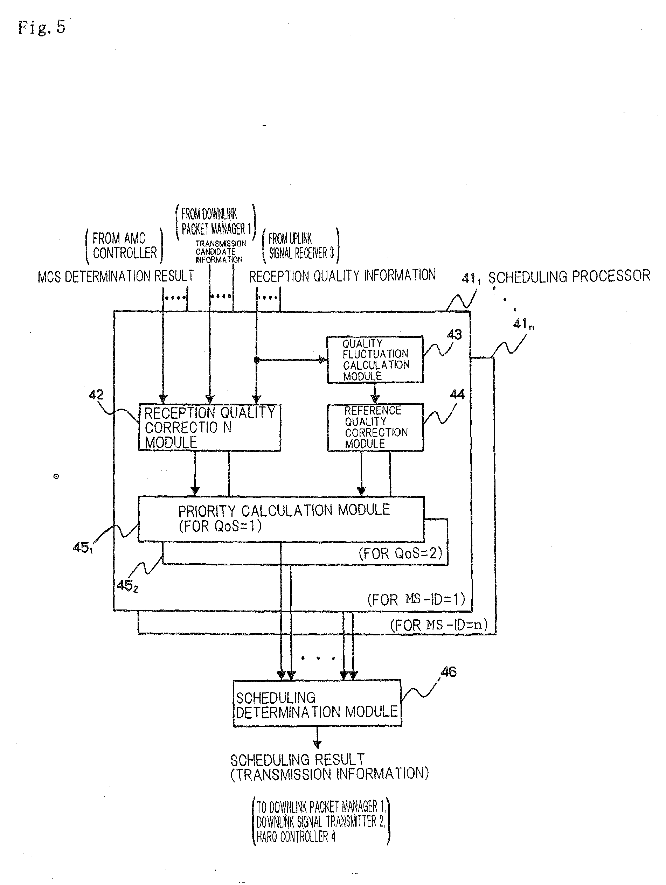

Fig. 5 is a block diagram illustrating in detail scheduling controller 6. Referring to Fig. 5, scheduling controller 6 comprises a plurality of scheduling processors 41₁ - 41 ₙ, and scheduling determination module 46.

Each of scheduling processors 41₁ - 41 ₙ comprises reception quality correction module 42, quality fluctuation calculation module 43, reference quality correction module 44, and priority calculation module 45₁ - 452.

Scheduling processors 41₁ - 41 ₙ, each of which is provided for each of the serviced mobile stations, calculate a priority for a transmission candidate to each mobile station using the transmission candidate information from downlink packet manager 1, the downlink reception quality from uplink signal receiver 3, and the MCS determination result from AMC controller 5, and notifies scheduling determination module 46 of the calculated priority.

Reception quality correction module 42 recognizes on a QoS-by-QoS basis whether or not a transmission candidate packet is retransmitted based on the transmission candidate information from downlink packet manager 1, and performs processing that corresponds to the recognition as to whether or not a retransmission has occurred.

When the transmission candidate packet is not retransmitted, reception quality correction module 42 notifies priority calculation module 45₁ or 45₂ of the reception quality of the downlink from uplink signal receiver and the MCS determination result from AMC controller 5, as they are, without correcting them.

When the transmission candidate packet is retransmitted, reception quality correction module 42 corrects the reception quality of the downlink from uplink signal receiver 3 based on the number of times of retransmissions included in the transmission candidate information, and notifies priority calculation module 45₁ or 45₂ of the corrected downlink reception quality. A mobile station of this embodiment, upon receipt of a retransmitted signal, uses not only the retransmitted signal but also those previously received signals which were not normally demodulated in decoding to improve the gain. Accordingly, when a signal is retransmitted, the possibility of normally decoding the signal at a mobile station is equivalent to the possibility of a signal which is transmitted with a better reception quality than the actual reception quality provided by a radio network. Thus, reception quality correction module 42 corrects the reception quality in consideration of improvement in gain in the event of retransmission. A degree of correction made for the reception quality in accordance with the number of times or retransmissions can be determined by a decoding algorithm which is applied to the mobile station.

Also, in regard to retransmission, a signal must be retransmitted with the same MCS as that at the first transmission of the signal, because the signals are combined at the mobile station. Therefore, reception quality correction module 42 notifies priority calculation module 45₁ or 45₂ of MCS associated with the first transmission included in the transmission candidate information from downlink packet manager 1, instead of the MCS determination result from AMC controller 5.

Quality fluctuation calculation module 43 stores downlink reception qualities for the past fixed period, notified from uplink signal receiver unit 3, and calculates a variance for a certain period. Then, quality fluctuation calculation module 43 notifies reference quality correction module 44 of the calculated variance of the downlink reception quality as the amount of fluctuations in the reception quality.

Reference quality correction module 44 corrects a reference quality, which has been set for each MCS and QoS in accordance with the amount of fluctuations in the reception quality notified from quality fluctuation calculation module 43, and notifies priority calculation modules 45₁ - 45₂ of the corrected reference quality. The reference quality serves as a reference value related to the downlink reception quality which is used in calculating the priority for a transmission candidate, and is set on a MCS-by-MCS basis and QoS-by-QoS basis.

Each of priority calculation modules 45₁ - 45₂, which corresponds to each QoS, calculates a priority for a transmission candidate using the corrected reception quality (reception quality after the correction) and MCS notified from reception quality correction module 42, and a corrected reference quality corresponding to the notified MCS from reception quality correction module 42, among the reference qualities corrected by and notified from reference quality correction module 44 (corrected reference qualities), and notifies scheduling determination module 46 of the priority.

The priority is calculated by applying the difference between the corrected reception quality and corrected reference quality to a predetermined relational expression. By correcting the reception quality and reference quality, the priority can be calculated to appropriately reflect the possibility of delivery. A specific example of the relational expression will be described later.

Scheduling determination module 46 compares the priorities for transmission candidate packets on a mobile station-by-mobile station basis and on a QoS-by-QoS basis, notified from scheduling processors 41₁ - 41ₙ, and assigns a transmission opportunity to a transmission candidate packet which is given the highest priority. If there are a plurality of transmission candidates which are given the highest priority, scheduling determination module 46 assigns a transmission opportunity to a transmission candidate which has the shortest remaining time within the acceptable delay period. If there are a plurality of transmission candidates which are given the highest priority and have the shortest remaining time within the acceptable delay period, scheduling determination module 46 assigns a transmission opportunity to a transmission candidate which has waited the longest time for a transmission opportunity since the preceding assignment.

Then, scheduling determination module 46 notifies downlink packet manager 1, downlink transmission signal transmitter 2, and HARQ controller 4 of the result of the scheduling determination and information on the transmission candidate packet which is assigned a transmission opportunity.

Next, a description will be given of the operation of the radio base station apparatus according to this embodiment.

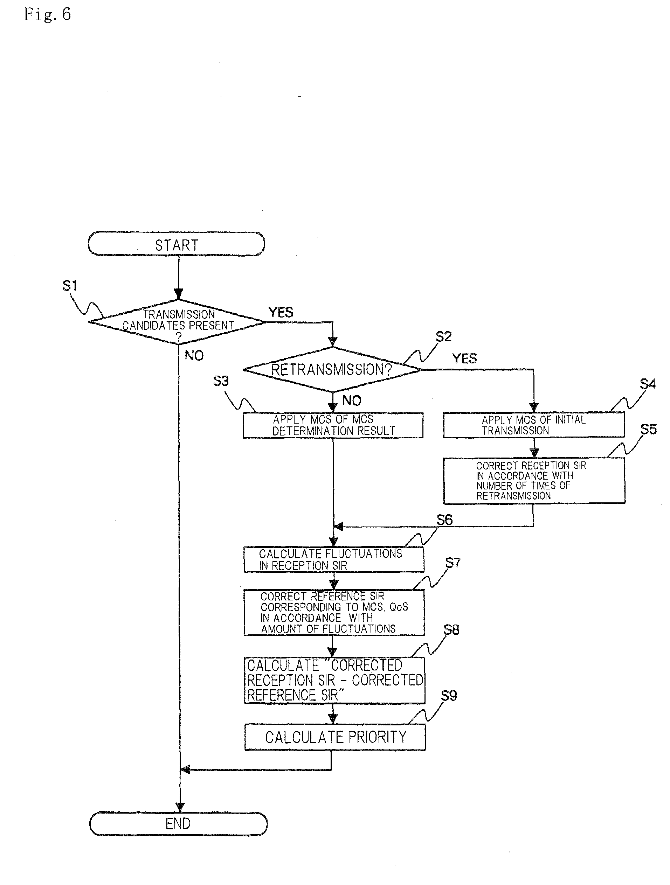

Fig. 6 is a flow chart illustrating the process for calculating the priority for a transmission candidate packet of one certain MS-ID and QoS, in scheduling processor 41 shown in Fig. 5. Referring to Fig. 6, scheduling processor 41 first examines the presence or absence of a transmission candidate packet (step S1).

When there is no transmission candidate packet, scheduling processor 41 terminates the process. When there is a transmission candidate packet, scheduling controller 41 examines whether or not the transmission candidate packet is to be retransmitted (step S2).

When not retransmitted, scheduling processor 41 applies an MCS determination result by using AMC controller 5 to subsequent processing (step S3). When retransmitted, scheduling processor 41 applies MCS, used when the packet was transmitted the first time, to subsequent processing (step S4). When retransmitted, scheduling processor 41 further corrects the reception quality in accordance with the number of times of retransmission (step S5). Assume herein that SIR (Signal to Interference power Ratio) is used as an example of quality.

After processing at step S3 or step S5, scheduling processor 41 calculates a variance of reception SIR for the past fixed period (step S6). The value of the variance indicates the amount of fluctuations in reception SIR. Next, scheduling processor 41 corrects reference SIR that corresponds to MCS and QoS of the transmission candidate packet in accordance with the amount of fluctuations (step S7).

Then, scheduling processor 41 calculates the difference between the corrected reception SIR and corrected reference SIR (step S8), and substitutes the difference into a predetermined relational expression (priority function) to calculate the priority (step S9).

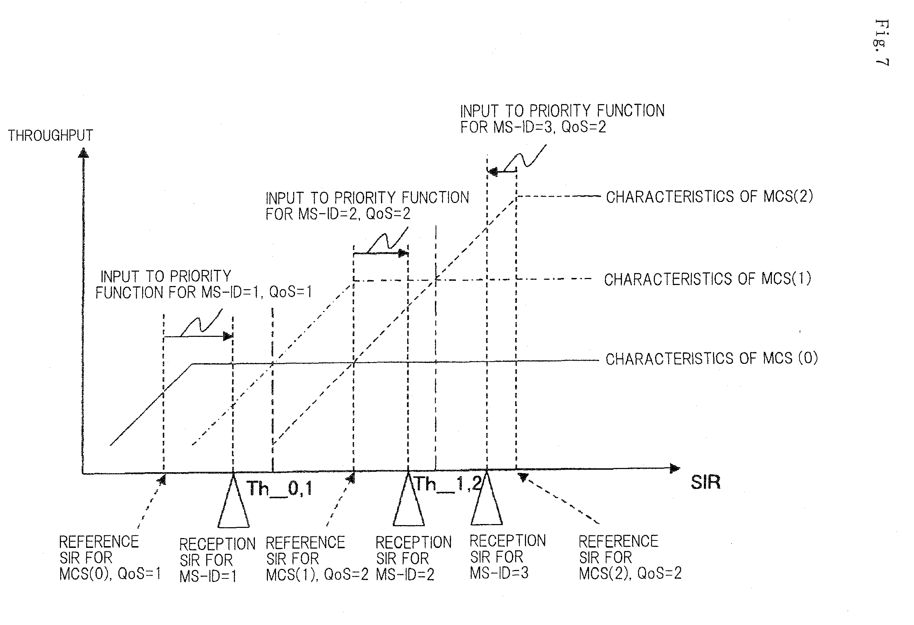

Fig. 7 is a diagram for describing processing at step S8 in Fig. 6. The processing at step S8 includes calculating the difference between the corrected reception SIR and corrected reference SIR, and using the difference as a reference value (input value to the priority function) for calculating the priority.

Fig. 7 illustrates throughput characteristics for SlRs of three types of MCSs (MCS(0) - MCS(2)). Such throughput characteristics can be previously found by simulating static characteristics of each MCS or the characteristics in a particular transmission path model.

In this event, MCS((0) presents the highest throughput in a region where SIR<Th_0, 1; MCS(1) in a region where Th_0, 1≤SIR<Th_1, 2; and MCS(2) in a region where SIR≥Th_1, 2. Accordingly, with the AMC control, MCS(0) is selected for mobile station 1 (MS-ID=1) which presents reception SIR<Th_0,1; MCS(1) is selected for mobile station 2 (MS-ID=2) which presents Th_0. 1≤reception SIR<Th_1, 2; and MCS(2) is selected for mobile station 3 (MS-ID=3) which presents reception SIR≥Th_1, 2.

The reference SIR used for calculating the priority is set on a MCS-by-MCS basis and also on a QoS-by-QoS basis. For example, since QoS=1, which assumes real-time traffic, permits errors to some degree, SIR which can achieve 90 % of the maximum throughput of each MCS, is initially set as the reference SIR. Since QoS=2, which assumes non-real-time traffic, does not permit errors, SIR which can achieve 100 % of the maximum throughput of each MCS is initially set as the reference SIR.

Assuming herein that there exists a new transmission candidate packet with QoS=1, addressed to mobile station 1 (MS-ID=1), since MCS(0) has been selected for mobile station 1, scheduling processor 41 references reference SIR with MCS(0) and QoS=1, calculates "(reception SIR of mobile station 1)-(reference SIR with MCS(0) and QoS=1)", and substitutes the result into the priority function, as shown in Fig. 7.

Likewise, assuming that there exists a new transmission candidate packet with QoS=2, addressed to mobile station 2 (MS-ID=2), scheduling processor 41 references reference SIR with MCS(1) and QoS=2 for mobile station 2, calculates "(reception SIR of mobile station 2) - (reference SIR with MCS(1) and QoS=2)", and substitutes the result into the priority function.

Further, assuming that there exists a new transmission candidate packet with QoS=3, addressed to mobile station 3 (MS-ID=3), scheduling processor 41 references reference SIR with MCS(2) and QoS=2 for mobile station 3, calculates "(reception SIR of mobile station 3) - (reference SIR with MCS(2) and QoS=2)", and substitutes the result into the priority function.

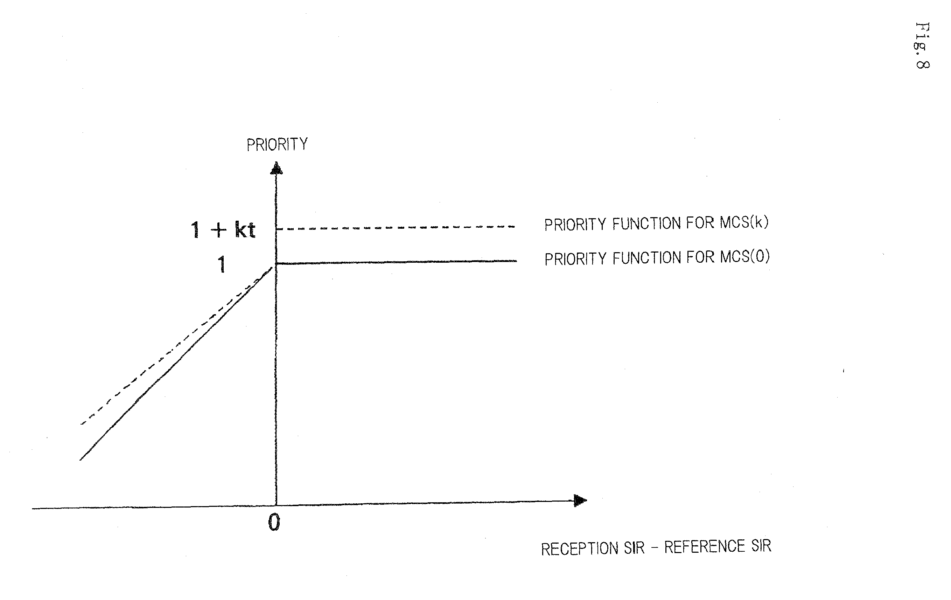

Fig. 8 is a diagram for describing the priority function (relational expression) used in the processing at step S9 in Fig. 6. The processing at step S9 includes calculating a priority using the priority function.

When "applied (reception SIR-reference SIR)<0", the priority function is represented by "throughput for reception SIR/throughput for reference SIR (initially set value)". This priority function employs the throughput characteristics with reception SIR used as a variable.

Since the reference SIR exists for each MCS and for each QoS, a priority function also exists for each MCS and for each QoS. Under the condition that "applied (reception SIR-reference SIR)<0", since the possibility of delivery varies depending on the magnitude of reception SIR, the priority is set in accordance with the possibility of delivery, as shown in Fig. 8.

On the other hand, when "applied (reception SIR-reference SIR)2≥0", the priority is the same for the same MCS, irrespective of the input. Specifically, the priority for MCS(k) is 1+k·t (where k is a non-negative integer, and t is a non-negative real number).

When the criterion "applied (reception SIR-reference SIR)≥0" is satisfied, the possibility of delivery remains unchanged even if reception SIR is even higher, so that the same priority is given in the same MCS. Also, under the condition that "applied (reception SIR-reference SIR)≥0" is satisfied, it is thought that the propagation environment is favorable for the MCS and therefore the possibility of delivery is sufficiently high. Accordingly, a higher priority is given to MCS which presents a higher throughput.

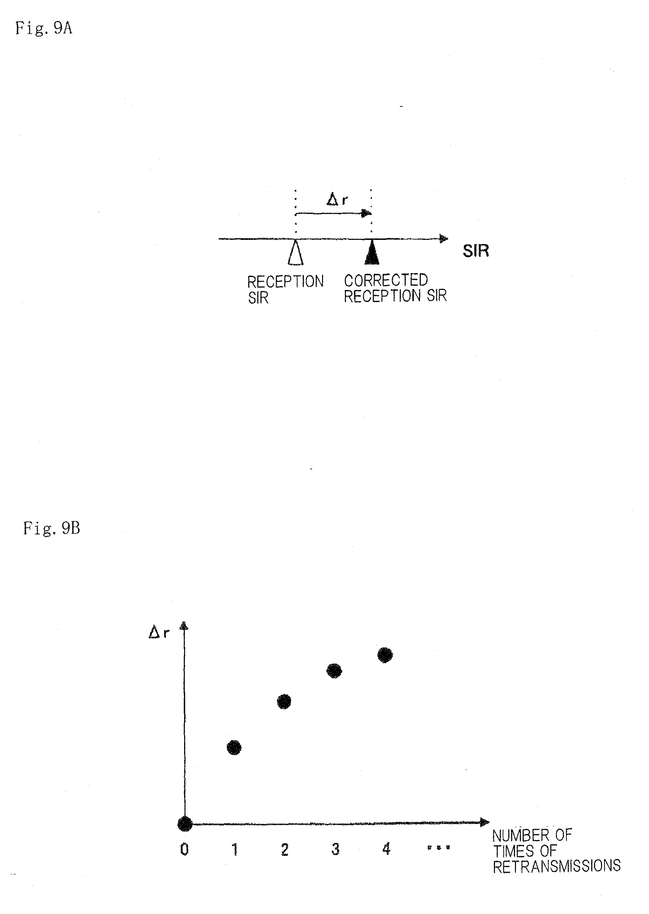

Fig. 9 is a diagram for describing the processing at step S5 in Fig. 6. The processing at step S5 includes correcting reception SIR. Fig. 9A is a diagram showing the relationship between uncorrected reception SIR and corrected reception SIR. The amount of correction for reception SIR is represented by Δr. Fig. 9B is a graph showing an exemplary relationship of correction amount Δr for reception SIR to the number of times of retransmissions. As can be seen in the graph, correction amount Δr increases as the number of times of retransmission increases.

When a signal is retransmitted, a mobile station which receives the retransmitted signal uses not only the retransmitted signal but also past received signals for decoding. This results in a combined gain or coding gain, so that better reception characteristics are provided than SIR at the time of retransmission. Therefore, during the calculation of the priority, by correcting reception SIR by an amount that is comparable to an improvement in gain that is added by the retransmission, the possibility of delivery can effect on the priority with higher accuracy. As a result, resources can be efficiently utilized to maintain a high throughput.

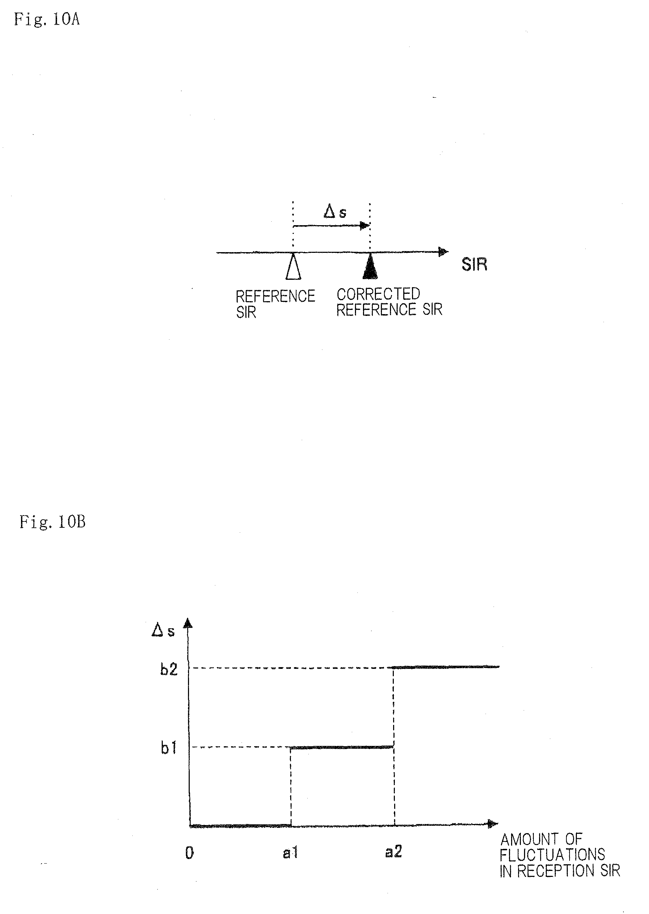

Fig. 10 is a diagram for describing processing at steps S6, S7 in Fig. 6. Processing at steps S6, S7 includes correcting reference SIR. Fig. 10A is a diagram showing the relationship between uncorrected reference SIR and corrected reference SIR. The amount of correction for reference SIR is represented by Δs.

Fig. 10B is a graph showing an exemplary relationship of correction amount Δs for reference SIR to the amount of fluctuations in reception SIR. As can be seen in the graph, correction amount Δs increases as reception SIR fluctuates more.

In the example shown herein, the steps to facilitate handling the correction amount and to ease processing are increased in reference SIR. When the amount of fluctuations in reception SIR is within the range of 0 to a1, correction amount Δs is zero. When the amount of fluctuations in reception SIR is within the range of a1 to a2, correction amount Δs is b1. When the amount of fluctuations in reception SIR is larger than a2, correction amount Δₛ is b2.

As a mobile station moves at a higher speed, the propagation environment fluctuates more vigorously, resulting in degraded reception characteristics and therefore a lower possibility of delivery.

Assume therefore that the variance of reception SIR for a past fixed period represents the amount of fluctuations in reception SIR, and as the amount of fluctuations in reception SIR is larger, the propagation environment is estimated to fluctuate more largely. As such, reference SIR is corrected in accordance with the amount of fluctuations in reception SIR. Specifically, reference SIR is corrected to shift toward higher SIR as the amount of fluctuations in reception SIR increases. With this correction, the priority tends to be lower at the same SIR as the propagation environment fluctuates more significantly, thus making it possible to reflect the possibility of delivery in the priority with higher accuracy. As a result, resources can be efficiently utilized to maintain a high throughput.

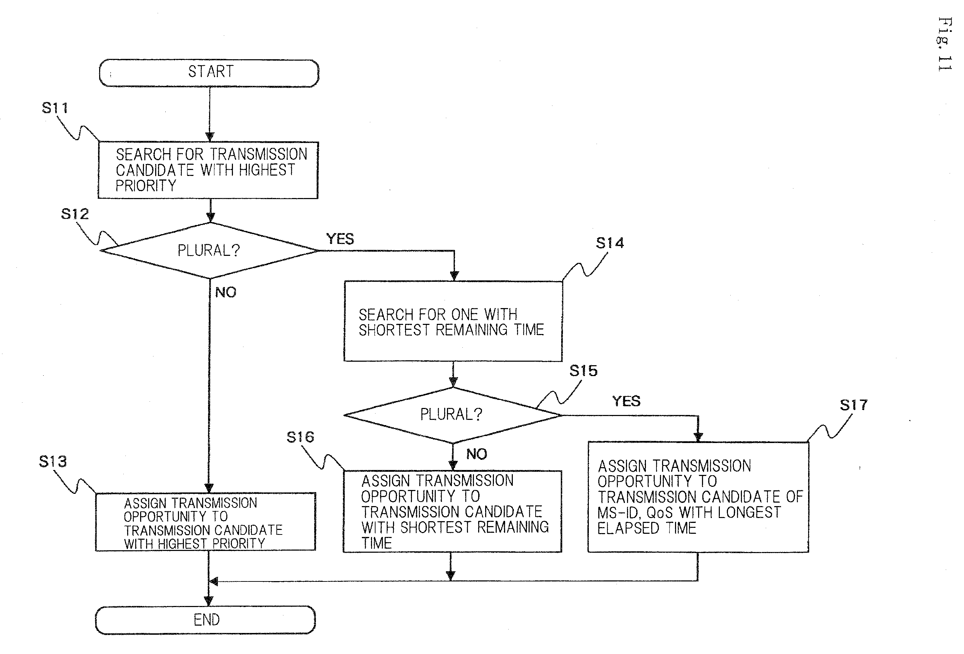

Fig. 11 is a flow chart illustrating the operation of the scheduling determination process in scheduling determination module 46 shown in Fig. 5.

After the processing at steps S1 - S9 shown in Fig. 6 has been performed for all transmission candidate packets of MS-ID, QoS, scheduling determination module 46 searches these transmission candidates for a transmission candidate packet which has been given the highest priority (step S11). Next, scheduling determination module 46 examines whether there is a single highest priority transmission candidate packet or there are a plurality of highest priority transmission candidate packets (step S12).

When there is only one highest priority transmission candidate packet, scheduling determination module 46 assigns a transmission opportunity to this transmission candidate packet (step S13).

When there exist a plurality of highest priority transmission candidate packets, scheduling determination module 46 searches these highest priority transmission candidate packets for one having the shortest remaining time within the acceptable delay period(step S14). Next, scheduling determination module 46 examines whether there is a single transmission candidate packet which has the shortest remaining time within the acceptable delay period or there are a plurality of such transmission candidate packets (step S15).

When there is only one transmission candidate packet which has the shortest remaining time within the acceptable delay period, scheduling determination module 46 assigns a transmission opportunity to this transmission candidate packet (step S16). When there exist a plurality of transmission candidate packets which have the shortest remaining time within the acceptable delay period, scheduling determination module 46 assigns a transmission opportunity to a transmission packet of MS-ID, QoS with the longest elapsed time from the preceding assignment of a transmission opportunity, among these transmission candidate packets (step S17).

As described above, according to the embodiment, the priority is calculated for a transmission candidate on a MCS-by-MCS basis and on a QoS-by-QoS basis, so that the possibility of delivery can be highly accurately reflected in the priority taking into consideration of the difference in MCS and QoS. Also, since a transmission opportunity is assigned based on the priority, the resources can be efficiently utilized without causing retransmissions for nothing.

Since the value of the reception quality used in calculating the priority is corrected in accordance with the number of times of retransmission, the possibility of delivery, which is increased with an improvement in gain added by the retransmission, can be highly accurately reflected in the priority, thus improving resource use efficiency.

Further, since the value of the reception quality used in calculating the priority is corrected in accordance with the amount of fluctuations in reception quality, the possibility of delivery, which is reduced with fluctuations in reception quality, can be highly accurately reflected in the priority, thus improving resource use efficiency.

While preferred embodiments of the present invention have been described using specific terms, such description is for illustrative purposes only, and it is to be understood that changes and variations may be made without departing from the spirit or scope of the following claims.

## Claims

1. A radio base station apparatus for adaptively switching a downlink line modulation and coding scheme in accordance with a downlink line quality to communicate with a mobile station over the air, said apparatus comprising:
a priority calculation module for calculating a priority for a transmission candidate signal to said mobile station based on a reference quality, which is set for each modulation and coding scheme, and on the downlink line quality; and
a scheduling determination module for assigning a transmission opportunity to a transmission candidate signal to said mobile station in accordance with the priority calculated by said priority calculation module.

2. The radio base station apparatus according to claim 1, wherein said priority calculation module calculates the priority, using a relational expression which is set for each modulation and coding scheme for a difference between the reference quality which is set for each modulation and coding scheme and the downlink line quality.

3. The radio base station apparatus according to claim 1 or 2, further comprising a reception quality correction module for correcting the downlink line quality notified from said mobile station in accordance with the number of times of retransmissions of the transmission candidate signal, and for supplying the corrected downlink line quality to said priority calculation module.

4. The radio base station apparatus according to claim 1, 2 or 3, further comprising a reference quality correction module for correcting the reference quality in accordance with the amount of fluctuations in the quality of the downlink line notified from said mobile station.

5. The apparatus according to claim 1, 2, 3 or 4, wherein said reference quality is set for each service quality of a transmission candidate signal.

6. A scheduling method in a radio base station apparatus for adaptively switching a downlink line modulation and coding scheme in accordance with the quality of the downlink line to communicate with a mobile station over the air, said method comprising:
calculating a priority for a transmission candidate signal to said mobile station based on a reference quality, which is set for each modulation and coding scheme, and on the downlink line quality; and
assigning a transmission opportunity to a transmission candidate signal to said mobile station in accordance with the calculated priority.

7. The scheduling method according to claim 6, comprising:
calculating the priority using a relational expression which is set for each modulation and coding scheme for a difference between the reference quality which is set for each modulation and coding scheme and the downlink line quality.

8. The scheduling method according to claim 6 or 7, further comprising;
correcting the quality of the downlink line notified from said mobile station in accordance with the number of times of retransmission of the transmission candidate signal for use in the calculation of the priority.

9. The scheduling method according to claim 6, 7 or 8, further comprising:
correcting the reference quality in accordance with the amount of fluctuations in the downlink line quality notified from said mobile station for use in the calculation of the priority.

10. The scheduling method according to claim 6, 7, 8 or 9, wherein said reference quality is set for each service quality of a transmission candidate signal.
